Europäisches Patentamt

European Patent Office

Office européen des brevets

(19)

(11) Veröffentlichungsnummer: **0 360 895**
**A1**

## EUROPÄISCHE PATENTANMELDUNG

(21) Anmeldenummer: 88115932.1

(22) Anmeldetag: 28.09.88

(51) Int. Cl.⁵ **B63H 3/08** , **B64C 11/38**

(43) Veröffentlichungstag der Anmeldung:
**04.04.90 Patentblatt 90/14**

(84) Benannte Vertragsstaaten:
**BE DE FR GB IT NL SE**

(71) Anmelder: **Kruppa, Claus, Prof.Dr.Ing.**
**Lückhoffstrasse 35**
**D-1000 Berlin 38(DE)**

(72) Erfinder: **Kruppa, Claus, Prof.Dr.Ing.**
**Lückhoffstrasse 35**
**D-1000 Berlin 38(DE)**

(74) Vertreter: **Niemann, Uwe, Dr.-Ing.**
**Ahornstrasse 41**
**D-4300 Essen 1(DE)**

(54) **Verstellpropeller, insbesondere für Bootsantriebe.**

(57) Die Erfindung betrifft einen Verstellpropeller, insbesondere für Bootsantriebe, mit einer rotierend angetriebenen Nabe (4) und daran verstellbar gelagerten Propellerflügeln (13) und mit einer Verstelleinrichtung, die einen in axialer Richtung beweglichen Verstellring mit daran befestigten Verstellstangen (16) für die Propellerflügel (13) aufweist, wobei in der Nabe (4) wenigstens ein durchgehender Abgaskanal (7) angeordnet ist. Um die Nabe von äußeren Verstellkräften zu entlasten, soll der Verstellring als Ringkolben (17) ausgebildet sein, der in axialer Richtung beidseits hydraulisch beaufschlagbar in einem Zylinderraum (18) der Nabe (4) angeordnet ist.

FIG.1

EP 0 360 895 A1

## Verstellpropeller, insbesondere für Bootsantriebe

Die Erfindung betrifft einen Verstellpropeller, insbesondere für Bootsantriebe, mit einer rotierend angetriebenen Nabe und daran verstellbar gelagerten Propellerflügeln und mit einer Verstelleinrichtung, die einen in axialer Richtung beweglichen Verstellring mit daran befestigten Verstellstangen für die Propellerflügel aufweist, wobei in der Nabe wenigstens ein durchgehender Abgaskanal angeordnet ist.

Derartige Verstellpropeller sind bekannt (EP-A-02 31 503, US-A-47 44 727). Sie werden bei Außenbordmotoren, sogenannten Z-Antrieben oder auch mit direkter Lagerung am Bootsrumpf eingesetzt. Ihre Abmessungen sind derart, daß sie gegen einen üblichen Propeller mit festen Propellerflügeln ausgetauscht werden können. Da Z-Antriebe große Nabendurchmesser bedingen, werden die Abgase des Antriebsmotors durch das als Abgaskanal ausgebildete Nabeninnere geführt.

Bei Verstellpropellern der eingangs beschriebenen Gattung werden die Verstellkräfte für die Propellerflügel mit einem von außen am Verstellring angreifenden Hebelgestänge aufgebracht. Die Verstellkräfte sind damit äußere Kräfte, die zusammen mit der von den Propellerflügeln erzeugten Schubkraft auf ein Schublager übertragen werden. Da bei einer derartigen Verstelleinrichtung die Verstellkräfte fast ebenso groß sind wie die Schubkraft, müssen nicht nur die kraftübertragenen Teile der Nabe, sondern auch das Schublager entsprechend dimensioniert werden. Das kann insbesondere bei kleineren Ausführungen zu erheblichen Problemen führen.

Bei Verstellpropellern für seegehende Schiffe ist es bekannt, eine Hydraulikflüssigkeit in die Propellernabe einzuführen und damit ein in der Nabe angeordnetes Kolbensystem zu beaufschlagen, welches die Propellerflügel verstellt (US-A-29 31 443).

Aufgabe der Erfindung ist es, die Nabe bei einem Verstellpropeller der eingangs beschriebenen Gattung von äußeren Verstellkräften zu entlasten.

Diese Aufgabe wird dadurch gelöst, daß der Verstellring als Ringkolben ausgebildet ist, der in axialer Richtung beidseits hydraulisch beaufschlagbar in einem Zylinderraum der Nabe angeordnet ist. Damit läßt sich eine raumsparende Konstruktion verwirklichen, insbesondere, wenn die Verstellstangen sich bis in den Zylinderraum erstrekken und in einem an den Zylinderraum anschließenden Abschnitt der Nabe spielfrei und abgedichtet geführt sind. Alle Verstellkräfte wirken nur innerhalb des ringförmigen Zylinderraums. Sie sind damit innere Kräfte, die das Schublager nicht mehr beaufschlagen. Im Inneren der Nabe bleibt genügend Platz für die Anordnung und Befestigung einer Antriebswelle sowie für einen oder mehrere Abgaskanäle.

Für die Zufuhr von Hydraulikflüssigkeit zu den Arbeitsräumen des Ringkolbens werden zweckmäßigerweise in der Nabe Bohrungen vorgesehen. Diese Bohrungen können insbesondere an der Stirnseite des einen Arbeitsraumes münden, wobei von der Bohrung zur Versorgung des anderen Arbeitsraumes ein Rohr ausgeht, welches in einem zugeordneten Durchlaß des Ringkolbens abgedichtet geführt ist und sich bis in diesen anderen Arbeitsraum erstreckt. Es versteht sich, daß die Bohrungen für die Zufuhr von Hydraulikflüssigkeit durch Nabenbereiche mit hinreichend großer Wandstärke geführt werden und deshalb aus verschiedenen Bohrungsabschnitten unterschiedlicher Richtung bestehen können.

Eine bevorzugte Ausführung der Erfindung ist dadurch gekennzeichnet, daß die rotierende Nabe eine axiale Hülse aufweist, die sich bis in einen nicht rotierenden Stator erstreckt, der innenseitig zwei umlaufende Nuten aufweist, die zusammen mit der Hülse Ringkammern bilden, daß durch den Stator geführte Leitungen für die Zufuhr von Hydraulikflüssigkeit in die Ringkammern münden und daß von den Ringkammern hülsenseitig die zu den Arbeitsräumen des Ringkolbens führende Bohrungen ausgehen. Pumpen und Steuereinrichtungen für die Zufuhr der Hydraulikflüssigkeit können dann am Stator oder einem damit verbundenen Teil angeordnet werden.

Um Verluste von Hydraulikflüssigkeit zu verringern oder ganz zu unterbinden, empfiehlt es sich, beidseits der nebeneinander angeordneten Ringkammern ringförmige Entlastungskammern vorzusehen, die an eine Entlastungsleitung des Stators angeschlossen sind. Ferner kann es zweckmäßig sein, den Stator selbst nachgiebig an einem Tragkörper, einem Bootsrumpf oder dergleichen, zu lagern, damit der Stator ohne Zwänge Bewegungen der mit der rotierenden Nabe verbundenen Hülse ohne wesentliche Kraftübertragung zwischen diesen beiden Teilen folgen kann.

Mit der beschriebenen Anordnung ist es auch möglich, die jeweilige Stellung der Propellerflügel zu messen und die Meßsignale für Steuer- oder Regelzwecke zu nutzen, wenn erfindungsgemäß die Verstellstangen sich bis in die flügelseitigen Entlastungskammern erstrecken und dort einen am Stator gelagerten Stößel beaufschlagen, der gegen die Wirkung einer Feder bewegbar ist und ein Potentiometer betätigt. Insbesondere können die Enden der Verstellstangen an einem in der flügelseitigen Entlastungskammer angeordneten Gleitring befestigt sein, der als rotierendes Widerlager für einen drehfest am Stator gehaltenen und in axialer Richtung mit dem Stößel beweglichen Ring ausgebildet ist.

Im folgenden wird ein in der Zeichnung dargestelltes Ausführungsbeispiel der Erfindung erläutert; es zeigen:

Fig. 1 in schematischer Darstellung und teilweise einen Schnitt durch einen Verstellpropeller, wobei der obere und der untere Teil dieser Figur Schnitte in verschiedenen radialen Ebenen wiedergeben,

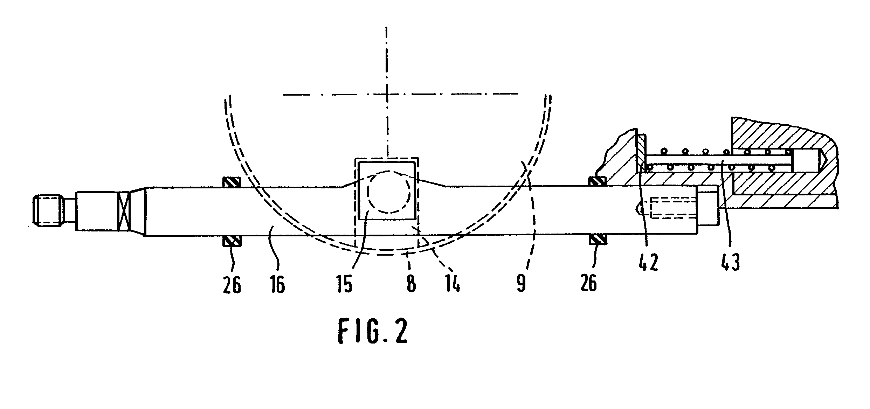

Fig. 2 eine Draufsicht auf eine Verstellstange,

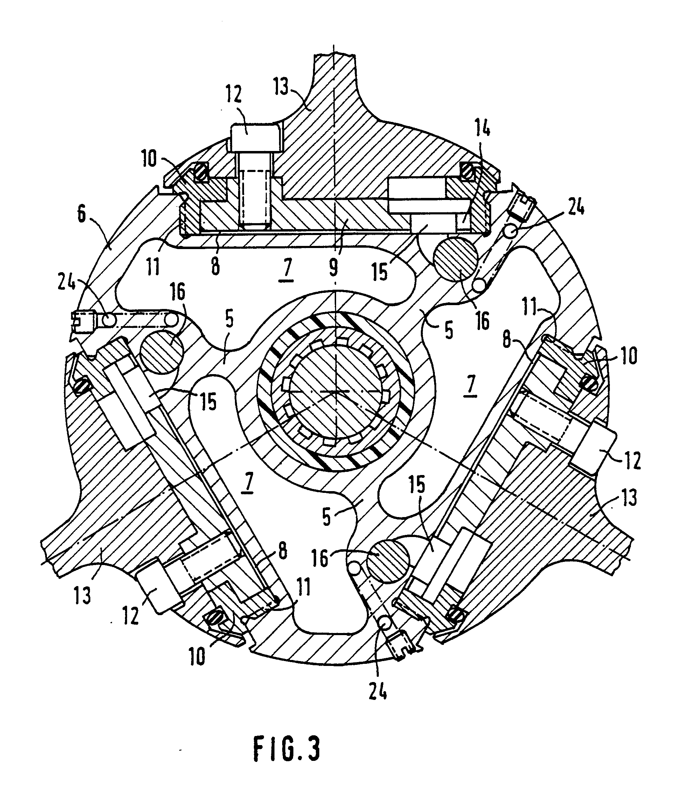

Fig. 3 einen Schnitt in Richtung III - III durch den Gegenstand nach Figur 1.

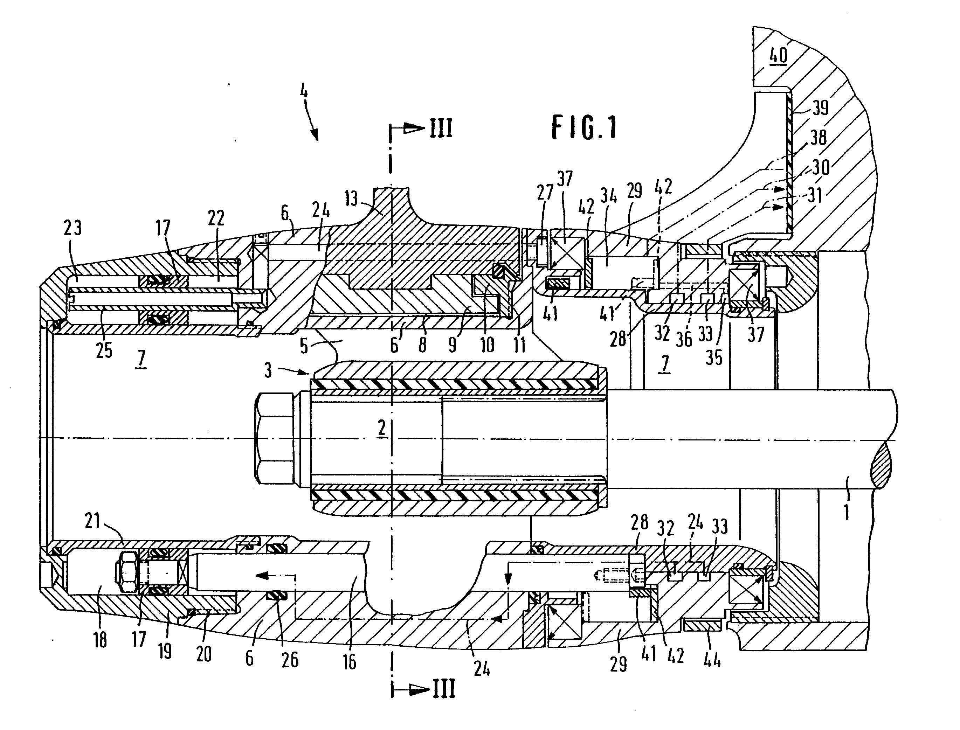

Der in der Zeichnung dargestellte Verstellpropeller ist für Bootsantriebe mit einem Außenbordmotor, einem Z-Antrieb oder dergleichen bestimmt. Der Verstellpropeller wird angetrieben von einer Welle 1, deren rechts außerhalb der Figur 1 liegendes Antriebsende an ein nicht dargestelltes Kegelradgetriebe angeschlossen ist. Das andere Ende 2 der Welle 1 ist in einer Lagerhülse 3 einer mit der Welle 1 rotierenden Nabe 4 gelagert. Die Lagerhülse 3 ist über Radialstege 5 mit dem äußeren Nabengehäuse 6 verbunden. Zwischen den Radialstegen 5 verbleiben durchgehende Abgaskanäle 7.

Das äußere Nabengehäuse 6 weist bei der dargestellten Ausführung außenseitig drei unter gleichem Winkel zueinander angeordnete Ausnehmungen 8 mit kreisförmigem Grundriß auf. In jede der Ausnehmungen 8 ist eine Verstellplatte 9 eingesetzt, die darin mit einem Haltering 10, der in ein Gewinde 11 der zugeordneten Ausnehmung 8 eingedreht ist, drehbar gehalten ist. An jeder Verstellplatte 9 ist mit Schrauben 12 ein Propellerflügel 13 befestigt. Jede Verstellplatte 9 weist eine radiale Nut 14 für einen darin geführten Gleitstein 15 auf. Die Gleitsteine 15 sind drehbar an Verstellstangen 16 gelagert, die in axialer Richtung im äußeren Nabengehäuse 6 geführt sind. Durch axiales Verschieben der Verstellstange 16 werden die Propellerflügel 13 verstellt.

Die Verstelleinrichtung der Verstellstangen 16 besteht aus einem Ringkolben 17, der an den in Figur 1 linken Enden der Verstellstangen 16 befestigt ist, und aus einem sich in axialer Richtung der Nabe 4 erstreckenden Zylinderraum 18, in dem der Ringkolben 17 beidseitig beaufschlagbar angeordnet ist. Der Zylinderraum 18 befindet sich in einem Nabenansatz 19, der in eine zugeordnete Gewindeausnehmung 20 am Ende des äußeren Nabengehäuses 6 eingedreht ist, und wird zwischen der äußeren Wandung dieses Nabenansatzes 19 und einer vom Nabenansatz 19 gegen das Nabengehäuse 6 verspannten Hülse 21 gebildet.

Die Versorgung der Arbeitsräume 22, 23 des Zylinderraums 18 mit Hydraulikflüssigkeit erfolgt über Bohrungen 24 im äußeren Nabengehäuse 6. Diese Bohrungen 24 münden an der flügelseitigen Stirnseite des Zylinderraums 18. Der flügelseitige Arbeitsraum 22 kann dadurch unmittelbar versorgt werden. Zur Versorgung des anderen Arbeitsraums 23 ist in eine zugeordnete Bohrung 24 ein Rohr 25 eingesetzt, welches sich durch den Ringkolben 17 erstreckt, darin abgedichtet geführt ist und in den anderen Arbeitsraum 23 mündet. Das ist im oberen Teil des Nabenansatzes 19 in Figur 1 wiedergegeben.

Die Verstellstangen 16 sind zumindest in dem an den Zylinderraum 18 anschließenden Abschnitt des äußeren Nabengehäuses 6 spielfrei geführt und außerdem mit Dichtungen 26 abgedichtet.

Die Bohrungen 24 für die Zufuhr von Hydraulikflüssigkeit bestehen aus mehreren Bohrungsabschnitten, die in unterschiedlichen Richtungen durch das äußere Nabengehäuse geführt sind. Das ist mit strichpunktierten Linien in Figur 1 angedeutet. Die Bohrungen 24 sind weitergeführt durch eine an das Nabengehäuse 6 mit Schraubverbindung 27 angeflanschte Hülse 28, die sich bis in einen nicht ro tierenden Stator 29 erstreckt. Durch den Stator 29 sind Leitungen 30, 31 für die Zufuhr von Hydraulikflüssigkeit geführt. Diese Leitungen 30, 31 münden in umlaufende Ringnuten des Stators 29, die zusammen mit der Hülse 28 Ringkammern 32, 33 bilden. Von den Ringkammern 32, 33 gehen hülsenseitig die Bohrungen 24 aus. Beidseits der nebeneinander angeordneten Ringkammern 32, 33 befinden sich im Stator 29 ringförmige Entlastungskammern 34, 35, die untereinander über eine Leitung 36 verbunden sind. Außenseitig sind die Entlastungskammern 34, 35 jeweils durch im Stator angeordnete, auf Hülsenabschnitten gleitende Dichtringe 37 abgedichtet. In die in Figur 1 linke Entlastungskammer 34 mündet eine durch den Stator 29 geführte Entlastungsleitung 38. Die Entlastungskammern 34, 35 stehen unter einem niedrigeren Hydraulikdruck als die Ringkammern 32, 33. Sie verhindern, daß aus den Ringkammern 32, 33 austretende Hydraulikflüssigkeit ins Wasser gelangt. Sie verringern auch dadurch entstehende Druckverluste in den Ringkammern 32, 33 bzw. in den Arbeitsräumen des Ringkolbens 17.

Damit beim Betrieb des Verstellpropellers die Abdichtung und die Übertragung der Hydraulikflüssigkeit zwischen dem Stator 29 und der mit der Nabe 4 rotierenden Hülse 28, die zusammen mit der Nabe 4 von der Welle 1 getragen wird, möglichst wenig durch Kräfte aus Relativbewegungen zwischen rotierenden und nicht rotierenden Teilen beansprucht werden, ist der Stator 29 bei 39 nachgiebig an einen Tragkörper 40 (z.B. eines Außenbordmotors) angeschlossen.

Wie man aus Figur 1 entnimmt, ist die ringförmige Entlastungskammer 34 größer als die andere Entlastungskammer 35. In diese Entlastungskammer 34 erstrecken sich die Enden der Verstellstangen 16, die dort jeweils ein Auflager für einen mit der Nabe 4 rotierenden Gleitring 41 besitzen. Der Gleitring 41 ist axial in der Entlastungskammer 34 verschiebbar und liegt mit seiner anderen Stirnseite an einem drehfest im Stator 29 gehaltenen Ring 42 an, der seinerseits axial verschiebbar auf wenigstens einem federbelasteten Stößel 43 abgestützt ist. Dieser Stößel 43 betätigt ein Potentiometer 44. Bei Bewegung der Verstellstangen 16 wird der Gleitring 41 von diesen mitgenommen und verschiebt den Ring 42 mit dem Stößel 43, wobei gleichzeitig das Potentiometer 44 verstellt wird. Ein vom Potentiometer 44 abgenommenes Meßsignal kann zu Steuer- oder Regelzwecken verwendet werden. Die Endlagen des Gleitringes 41 und des von diesem mitgeführten Ringes 42 sind in Figur 1 im oberen Teil einerseits mit durchgezogenen und andererseits mit gestrichelten Linien wiedergegeben.

Nicht dargestellt ist, daß der Stator 29 mit Abdichtung und Übertragung für die Hydraulikflüssigkeit auch weiter entfernt von der eigentlichen Propellernabe, z.B. im Bereich eines Getriebekastens für die Welle 1 angeordnet sein kann.

## Ansprüche

1. Verstellpropeller, insbesondere für Bootsantriebe, mit einer rotierend angetriebenen Nabe (4) und daran verstellbar gelagerten Propellerflügeln (13) und mit einer Verstelleinrichtung, die einen in axialer Richtung beweglichen Verstellring mit daran befestigten Verstellstangen (16) für die Propellerflügel (13) aufweist, wobei in der Nabe (4) wenigstens ein durchgehender Abgaskanal (7) angeordnet ist, **dadurch gekennzeichnet,** daß der Verstellring als Ringkolben (17) ausgebildet ist, der in axialer Richtung beidseits hydraulisch beaufschlagbar in einem Zylinderraum (18) der Nabe (4) angeordnet ist.

2. Verstellpropeller nach Anspruch 1, **dadurch gekennzeichnet,** daß die Verstellstangen (16) sich bis in den Zylinderraum (18) erstrecken und in einem an den Zylinderraum (18) anschließenden Abschnitt der Nabe (4) spielfrei und abgedichtet geführt sind.

3. Verstellpropeller nach Anspruch 1 oder 2, **dadurch gekennzeichnet,** daß in der Nabe (4) Bohrungen (24) für die Zufuhr von Hydraulikflüssigkeit zu den Arbeitsräumen (22, 23) des Ringkolbens (17) vorgesehen sind.

4. Verstellpropeller nach einem der Ansprüche 1 - 3, **dadurch gekennzeichnet,** daß die Bohrungen (24) an der Stirnseite des einen Arbeitsraums (22) münden und daß von der Bohrung (24) zur Versorgung des anderen Arbeitsraumes (23) ein Rohr (25) ausgeht, welches in einem zugeordneten Durchlaß des Ringkolbens (17) abgedichtet geführt ist und sich bis in diesen anderen Arbeitsraum (23) erstreckt.

5. Verstellpropeller nach einem der Ansprüche 1 - 4, **dadurch gekennzeichnet,** daß die rotierende Nabe (4) eine axiale Hülse (28) aufweist, die sich bis in einen nicht rotierenden Stator (29) erstreckt, der innenseitig zwei umlaufende Nuten aufweist, die zusammen mit der Hülse (28) Ringkammern (32, 33) bilden, daß durch den Stator (29) geführte Leitungen (30, 31) für die Zufuhr von Hydraulikflüssigkeit in die Ringkammern (32, 33) münden, und daß von den Ringkammern (32, 33) hülsenseitig die zu den Arbeitsräumen (22, 23) des Ringkolbens (17) führende Bohrungen (24) ausgehen.

6. Verstellpropeller nach einem der Ansprüche 1 - 5, **dadurch gekennzeichnet,** daß beidseits der nebeneinander angeordneten Ringkammern (32, 33) ringförmige Entlastungskammern (34, 35) vorgesehen sind, die an eine Entlastungsleitung (38) des Stators (29) angeschlossen sind.

7. Verstellpropeller nach einem der Ansprüche 1 - 6, **dadurch gekennzeichnet,** daß der Stator (29) nachgiebig an einem Tragkörper (40), einem Bootsrumpf oder dergleichen gelagert ist.

8. Verstellpropeller nach einem der Ansprüche 1 - 7, **dadurch gekennzeichnet,** daß die Verstellstangen (16) sich bis in die flügelseitige Entlastungskammer (34) erstrecken und dort einen am Stator (29) gelagerten Stößel (43) beaufschlagen, der gegen die Wirkung einer Feder bewegbar ist und ein Potentiometer (44) betätigt.

9. Verstellpropeller nach einem der Ansprüche 1 - 8, **dadurch gekennzeichnet,** daß die Enden der Verstellstangen (16) Auflager für einen in der flügelseitigen Entlastungskammer (34) angeordneten Gleitring (41) aufweisen, der als rotierendes Widerlager für einen drehfest am Stator (29) gehaltenen, in axialer Richtung mit dem Stößel (43) beweglichen Ring (42) ausgebildet ist.

FIG.1

26   16      15      8   14      9   26      42      43

FIG. 2

EP 0 360 895 A1

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| Y | GB-A- 845 866 (ROTOL LTD) <br> * Seite 6, Zeilen 87-118; Figur * | 1-4 | B 63 H 3/08 <br> B 64 C 11/38 |
| A | | 7 | |
| | --- | | |
| Y,D | EP-A-0 231 503 (MÜLLER) <br> * Zusammenfassung; Spalte 2, Zeile 32 - Spalte 3, Zeile 4; Figuren 1,2 * | 1-4 | |
| | --- | | |
| A | CH-A- 560 626 (ESCHER-WYSS GmbH) <br> * Spalte 2, Zeile 7 - Spalte 3, Zeile 12; Figur 1 * | 1-9 | |
| | --- | | |
| A | DE-A-2 627 973 (FEROY) <br> * Seite 6, Absatz 1 - Seite 7, letzter Absatz; Figur 1 * | 1-5 | |
| | --- | | |
| A | GB-A-1 190 775 (CHRISTIANI & NIELSEN) <br> * Seite 1, Zeilen 65-83; Figur 1 * | 1 | |
| | ----- | | |

| RECHERCHIERTE SACHGEBIETE (Int. Cl.3) |
|---|
| B 63 H <br> B 64 C <br> F 01 D <br> F 15 B |

Der vorliegende Recherchenbericht wurde für alle Patentansprüche erstellt

| Recherchenort | Abschlußdatum der Recherche | Prüfer |
|---|---|---|
| DEN HAAG | 02-06-1989 | DE SENA Y HERNANDORENA A |